(19) Europäisches Patentamt
European Patent Office
Office européen des brevets

(11) EP 1 974 869 A1

(12) EUROPEAN PATENT APPLICATION

(43) Date of publication:
01.10.2008 Bulletin 2008/40

(51) Int Cl.:
B25J 9/16 (2006.01)

(21) Application number: 07104900.1

(22) Date of filing: 26.03.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK RS

(71) Applicant: Honda Research Institute Europe
GmbH
63073 Offenbach/Main (DE)

(72) Inventors:
• Toussaint, Marc
10117 Berlin (DE)
• Gienger, Michael
60599 Frankfurt a. M. (DE)

(74) Representative: Rupp, Christian
Mitscherlich & Partner
Patent- und Rechtsanwälte
Sonnenstrasse 33
80331 München (DE)

(54) **Apparatus and method for generating and controlling the motion of a robot**

(57) According to the invention, a method for controlling a system or robot having at least one effector, comprises the steps:
- computing an initial sequence of control points
- evaluating the system with respect to a global cost function using internal simulation based on the control points;
- updating the set of control points based on the evaluation,

wherein the last two steps are repeated until a given termination criterion is met.

Fig. 1

start with an arbitrary initial state $q_0$ of the real robot — 110

task target $x_K^*$

total time $T$ in sec

number $K$ of segments

compute linear interpolation sequence $x_{1:K}^*$ of Control Points {CPs} — 120

compute gradient $dC/dx_{1:K}^*$ of the global cost function $C$ w.r.t. the CPs $x_{1:K}$ — 130

update the CPs using RPROP — 140

tolerance parameter

termination criterion — 150 NO

YES

command sequence of optimized CPs $x_{1:K}^*$ to the real robot, each CP is active for $T/K$ secs — 160

real robot will have reached the task target in $T$ secs fulfilling the optimality criteria — 170

100

EP 1 974 869 A1

## Description

The present invention relates to the field of robotics. In particular, it relates to the generation of control points / attractor points (control points) controlling the trajectory and internal parameters of a redundant task-level controller to yield globally optimal trajectories.

TECHNICAL BACKGROUND AND PRIOR ART

Industrial robots generally comprise an effector, which is commonly the manipulator. In humanoid robotics, the effector is often defined as a reference point of the hand, like for instance the finger tip. The effector could also be the head, which is controlled to look at a certain point or in a certain direction.

There are many ways to describe effector motions. For effector positions, commonly the x-, y and z-elements of a position vector are chosen. For spatial orientations, the task is often described in Euler angles or quaternions. In many cases, special descriptions for a task are used. A common way to generate motion of a robotic system is to describe the path of the effector in task coordinates. This path is denoted a task trajectory (TT) and is a continuous path describing the motion of a system. The trajectory may describe the path of the individual joints, or a path represented in task coordinates.

The space that described by the task coordinates is called the task space. If e.g. the hand position of a robot in x-, y- and z-direction is controlled, the task space has the dimension 3 and is spanned by these coordinates. The number of task coordinates is a measure for the dimensionality of the task to be carried out. For example, if the position of a robot hand is to be controlled, the task coordinates are the position coordinates x, y and z of the hand. The dimensionality of the task is three.

In another example, the position and the orientation of the hand is to be controlled, the task coordinates are the x, y and z elements for the position, and three angles for the orientation (e.g. Euler angles). In this case, the task is 6-dimensional.

In a further example, if the motion shall be characterized by the individual joints not violating their limits, the control parameters may be composed of parameters describing a cost function that penalizes joint angles that deviate from their preferred position.

Additional controller parameters may influence the generated motion, but do not influence the tracking of the trajectory points. This is a feature of redundant robots. Such parameters could be criteria like joint limit avoidance, torque minimization, etc.

In other words, in addition to the task trajectory, the motion may be influenced by a set of control parameters, which impose a desired behaviour of the remaining degrees of freedom of the robotics system, the so-called null space. In other words, the null space is the space in which a motion does not influence the task space motion. If e.g. a robot has 7 degrees of freedom, and the task vector is the 3-dimensional hand position, then the null space has 4 dimensions. The system is redundant with respect to the task. All motion of the arm that does not interfere with the task motion is called the null space motion. Again, these null-space parameters may vary over time and the system's behavior is defined by the time evolution of these control parameters, the parameter trajectory (PT).

In high performance robotic systems, the time between two control cycles is typically in the order of 1-10 msec. Thus, following the above approach, the TT and the PT need to be specified in a very fine time resolution. Traditional trajectory optimization techniques try to compute optimal TTs on this fine time scale. Then, in order to follow this trajectory a control loop is imposed which was not itself subject to the optimization process.

A possible approach to a more compact movement representation is to specify a finite set of control points. The TT and PT are then an interpolation between these control points using spline (e.g. 5th order polynomials) or filtering techniques (e.g. computing trajectory points based on attractor dynamics). The advantage of using a control point-based trajectory representation is the reduction of a complex task trajectory and a large set of controller parameters into a set of discrete control points. This means a significant reduction of the command data that have to be generated.

The literature regarding robot trajectory optimization can be subdivided into two classes. One class deals with the generation of optimal trajectories with respect to time, smoothness or collisions. The employed optimization methods have a global character, which makes it necessary to repetitively recompute the overall motion with different parameters. Such methods cause high computational costs and therefore can mostly not be computed within the short time steps of a real-time controller implementation. The second class recognizes the role of movement primitives in biology and include approaches to translate this idea to the realm of robotic control. Here movement primitives are used as a means to simplify programming of movements or for imitation learning. However, no global optimization of control parameters has been proposed yet.

Most approaches stemming from the first class of literature are designed for industrial robots. These approaches may be considered similar to the proposed idea, if the number of the joints equals the dimension of the optimization problem. Under these circumstances, there exists a unique mapping from task- to joint space (inverse kinematics), and the overall behavior is uniquely defined. If, however, the number of joints is larger than the dimension of the task (redundancy), the movement is not any more uniquely defined. Redundant control algorithms use this characteristics to satisfy further criteria in the so-called null space of the motion. Often, criteria like joint limit avoidance etc. are used.

In the work of Heim et al (Trajectory Optimization of Industrial Robots with Application to Computer-Aided Robotics and Robot Controllers. Optimization (Journal), Vol. 47, pp. 407-420), the trajectories are represented in a spline parameterization (Cubic splines). Examples are given for a spline parameterization on joint- and on task-level. The spline parameters are computed for a predefined number of set points, and the optimization algorithm finds the optimal set points for the given problem with respect to the dynamic model of the robot. However, the computed motion will be optimal in terms of the underlying dynamic model of the robot, but the controller itself is left out of consideration. In their approach, the optimal trajectory is rather commanded to the robot, and the robot motion control has to ensure the exact tracking.

Schlemmer and Gruebel (Real-Time Collision-Free Trajectory Optimization of Robot Manipulators via Semi-Infinite Parameter Optimization. International Journal of Robotics Research, Vol. 17, No. 9, September 1998, pp. 013-1021) compute optimal solutions for a robot with a large number of joints under consideration of collisions with external objects and the dynamics of the robot. However, the trajectory is represented as a set of spline parameters on joint level. This way, the overall motion is uniquely defined and the controller is implicitly incorporated in the scheme. However, the optimized trajectory is not represented on task level. Further, their approach doesn't allow to optimize additional controller parameters.

Zhang and Knoll (An Enhanced Optimization Approach for Generating Smooth Robot Trajectories in the Presence of Obstacles. Proc. of the 1995 European Chinese Automation Conference, London, September 1995, pp. 63-268) propose a similar approach. In their terminology, the set points are called subgoals, and B-splines on joint level are optimized between these subgoals to generate a collision-free point-to-point motion. In their paper, they propose an adaptation of the number of subgoals, if the goal cannot be reached without collisions.

In the work of Abdel-Malek et al. (Optimization-based trajectory planning of the human upper body. Robotica (Journal), Cambridge University Press, 2006), optimal task-level trajectories with respect to a jerk measure (time derivative of acceleration) are generated. This criterion is known to generate motions that are very similar to human movements. However, the optimal solution is computed for the task, and the overall joint motion is not taken into account. In a second independent step, B-splines are optimized for the joint motions. For this, a heuristic set of cost functions is used.

Concerning the existing literature on the concept of movement primitives, some early work reports on evidence for motor primitives in frogs (cf. F. A. Mussa-Ivaldi, S. F. Giszter, and E. Bizzi. Linear combinations of primitives in vertebrate motor control. Neurobiology, 91: 7534-7538, 1994 and E. Bizzi, A. d'Avella, P. Saltiel, and M. Tresch. Modular organization of spinal motors systems. The Neuroscientist, 8:437-442, 2002). Inspired by these biological findings several researches have adopted the concept of motor primitives to the realm of robotic movement generation. For instance, Amit and Mataric (Parametric primitives for motor representation and control. In Proc. of the Int. Conf. on Robotics and Automation (ICRA), pages 863-868, 2002) propose a model in which a reactive controller is learnt the output of which is the attractor parameter of an underlying movement primitive. Ijspeert & Schaal et al. (A. Ijspeert, J. Nakanishi, and S. Schaal. Trajectory formation for imitation with nonlinear dynamical systems. In Proc. of the IEEE Int. Conf. on Intelligent Robots and and Systems, 2001 and S. Schaal, J. Peters, J. Nakanishi, and A. Ijspeert. Control, planning, learning, and imitation with dynamic movement primitives. In Workshop on Bilateral Paradigms on Humans and Humanoids, IEEE Int. Conf. on Intelligent Robots and Systems, LasVegas, NV, 2003) focus on non-linear attractors and learning the nonlinearities, e.g., in order to imitate observed movements.

Regarding the question of what is being optimized, these approaches optimize the parameters of a single attractor system, e.g., such that this single movement primitive imitates as best as possible a teacher's movement. It is therefore an object of the present invention to address the problem of optimizing a sequence of control points, each one of which defines a movement segment, to fulfill global optimality criteria.

Regarding the question of how it is optimized, these approaches use data generated from exploratory trials to train the attractor dynamics. It is therefore a further object of the present invention to use a given robot model and our knowledge about the control architecture to derive analytic gradients for optimization.

Finally, regarding redundancy, these approaches do not address optimization under redundancy, i.e., they do not distinguish between a task state x and a robot state q. Therefore, it is yet another object of the present invention to devise an optimization scheme that accounts for the redundant inverse kinematics used in the control architecture and thereby allows us to define arbitrary task spaces as a more compact representation of the movement.

SHORT SUMMARY OF THE INVENTION

These objects are achieved according to the invention by a method and a system according to the independent claims. Advantageous embodiments are defined in the dependent claims.

According to a first embodiment of the invention a method for controlling a system having at least one effector may comprise the steps of computing an initial sequence of control points, evaluating the system with respect to a global cost function using internal simulation based on the control points and updating the set of control points based on the evaluation, wherein the last two steps are repeated until a given termination criterion is met.

The global cost function may comprise optimality criteria that are formulated such that the underlying attractor dynamics generate globally optimal trajectories. The timing of control points may be controlled by causal events.

The initial sequence of control points may be computed by linear interpolation from the initial effector position to the target position. The computation of the gradient may comprise the steps of forward simulating the robot's behaviour and backward propagating the cost function. The set of control points may be updated using a standard optimization algorithm such as RPROP, the Conjugate Gradient method or stochastic search.

In a further embodiment of the invention, the optimality criteria for the control points may be formulated such that the underlying reactive attractor dynamics generate globally optimal trajectories. The resulting movement integrates the properties of smoothness and stability of the attractor dynamics with global optimality criteria. Unlike traditional optimization techniques, this optimization is performed on the lower-dimensional compact representation of control points and includes the underlying control loop itself as subject to optimization.

In another embodiment of the invention, the optimization scheme may be integrated into a real-time system in a way that the optimal motion will iteratively be computed on the fly. The new control points are computed while the robot has already started to move, and the newly generated control points may be applied during execution of the motion.

In yet another embodiment of the invention, the task space may be parameterized and these parameters may be optimized as well. This allows to find an optimal definition of the task space itself. Often a problem or cost function leaves it unspecified on which task space control points should be defined. For instance, for a bimanual grasping problem the task space could either be composed of the absolute positions of both hand, or alternatively of the relative and the mean position of both hands.

In still another embodiment of the invention, the number of control points may itself be optimized in order to find an optimal number of control points that solves a given problem. An optimal number of control point elements for each individual task element, i.e. an optimal task dimension, may also be found. For instance, while the position of the hand is optimally controlled with three control points, the hand orientation is optimally controlled with five control points.

In another embodiment of the invention, the timing of control points may be optimized in the sense that optimal timing between the control points is found. The timing may be parameterized and optimized together with the control points. An optimal timing may also be found on the level of individual elements of the control points. For instance, the timing of applying the control points of the left hand may be different as compared to the timing of control points for the right hand.

In a further embodiment of the invention, arbitrary motion criteria may be included into the control point generation, i.e. a set of criteria may be integrated into the computation of the control points. This set may be an arbitrary combination of kinematic and dynamic cost functions, as e.g. collision avoidance, momentum compensation, etc. Another example is to optimize the similarity to an observed human motion. A third example would be intermediate conditions, as e.g. having the head to look at a certain point while performing the overall motion.

A system comprising at least one effector or robot may be controlled by commanding these attractor points time-synchronized. The optimized attractor points (control points) are commanded to the robot / system at discrete steps in time. This may be realized by an interface that synchronizes the robot's controller with the time at which the attractor points have to be applied. Alternatively, the system or robot may be controlled by commanding these attractor points synchronized by causal events. This may be the success signal of a phase to achieve a logically interrelated sequence of attractor movements.

SHORT DESCRIPTION OF THE FIGURES

These and other aspects and advantages of the present invention will become more apparent when studying the following detailed description, in connection with the drawing, in which

Fig. 1    is a schematic depiction of an overall scheme of control point optimization according to one embodiment of the invention;

Fig. 2    shows details of a single optimization pass according to one embodiment of the invention;

Fig. 3    describes a functional network of the control architecture; and

Fig. 4    shows back-propagation equations for a cost gradient according to one embodiment of the invention in mathematical terms.

DETAILED DESCRIPTION

The control points are represented following the approach of attractor dynamics. This has the additional advantage of a robust reactive control cycle on the fine time resolution, the attractor of which can be modulated on a more coarse time scale by adjusting the control points.

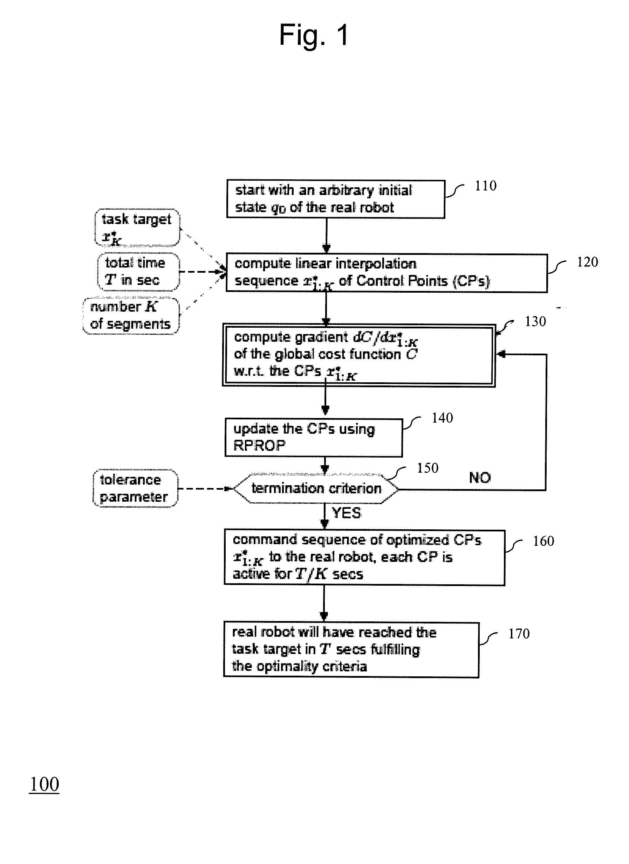

A system structure according to one embodiment of the invention is depicted in Figure 1. The problem is characterized by parameters (on the left-hand side) which define the target position $x_K^*$ of the effector, the time T in which this target is to be reached, and the number K of control points we allow during the execution of the movement. This problem is redundant in that the effector target $x_K^*$ does not define a full target robot state. Each control point divides the movement into one of K segments, each with duration T/K.

Given an arbitrary starting position $q_0$ of the robot ($q_0$ subsumes all joint angles) in step 110, an initial set of control points $x^{*}_{1:K}$ is computed by linear interpolation from the initial effector position $x_0$ to the target $x^{*}_{K}$ in step 120.

A gradient of the global cost function with respect to the control points is then computed in step 130. This computation must exactly account for (simulate) the behaviour of the real robot, if the control points were sent as a movement command and estimate the change of global cost depending on changes of the control points. Note that a change of a control point in early stages of the movement may have considerable effect on cost that appear later during the movement (delayed effect), e.g. when disadvantageous velocities towards obstacles are build up.

In step 140, once the gradient is computed, a state-of-the-art gradient based optimization step, e.g. RProp, may be used to update the $x^{*}_{1:K}$ in one embodiment of the invention. A tolerance parameter may be used to decide if the cost has been minimized sufficiently.

On termination in step 150, the optimized sequence of control points $x^{*}_{1:K}$ may be output or sent to the real robot, each being active for the duration of one segment, in step 160. The robot may follow a trajectory as internally simulated within the gradient computation procedure and fulfill the imposed effector target constraints and the cost criteria in step 170.

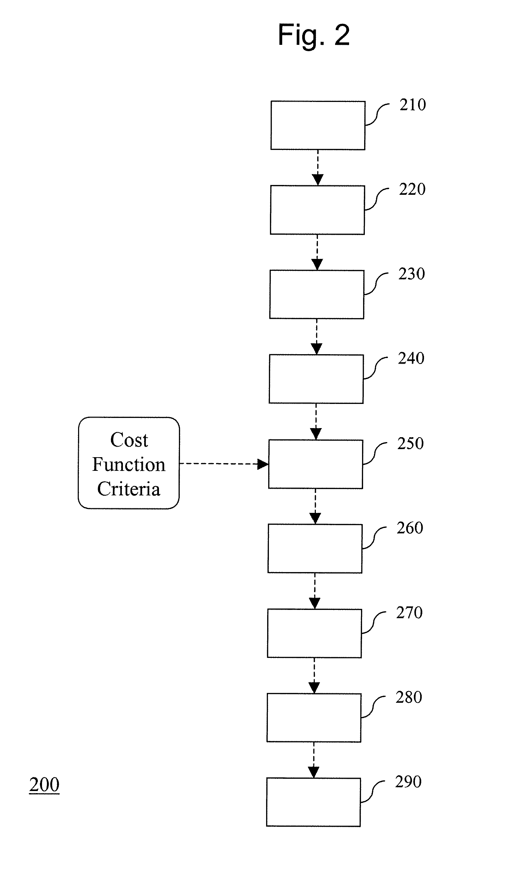

A procedure 200 for computing a gradient having linear time complexity based on forward and backward propagations of gradients is detailed in Figure 2. It distinguishes two passes: the forward simulation of the robot's behaviour and the backward propagation of the cost gradient. This backward propagation is necessary to compute the exact gradient in this redundant attractor control scenario.

Given an initial robot state q(t = 0) and an initial sequence of control points $x^{*}_{1:K}$ in step 210, the forward simulation of the robot's behaviour proceeds by forward iterating over the parameter t (time, ranging from 0 to T) to compute to compute the motion resulting from the attractor dynamics. In this particular example, the attractor dynamics are characterized by a ramp trajectory r(t) computed in step 220 from the given control points $x^{*}_{1:K}$ and a smoothed effector trajectory x(t) that is computed in step 230 using the ramp trajectory r(t), again iterating over t forward from 0 to T. After that, the state trajectory q(t) is computed in step 240 using the smoothed effector trajectory x(t) by iterating over t from 0 to T.

Using the so computed state trajectory q(t), the global costs C associated with the set of control points under investigation are computed in step 250. Hereby, parameters of the cost function may provide a weighting for motion or cost criteria comprising collision, smoothness and nullspace criteria.

Then, the cost gradient is backward propagated in the second pass. First, the gradient dC/dq(t) is computed in step 260 with respect to the state trajectory q(t), iterating over t from T to 0. In the next step, the gradient dC/dx(t) is computed in step 270 with respect to the effector trajectory x(t), iterating over t from T to 0. Then, the gradient dC/dr(t) is computed in step 280 with respect to the ramp trajectory r(t) and finally the gradient dC/d $x^{*}_{1:K}$ is computed in step 290 with respect to the control points.

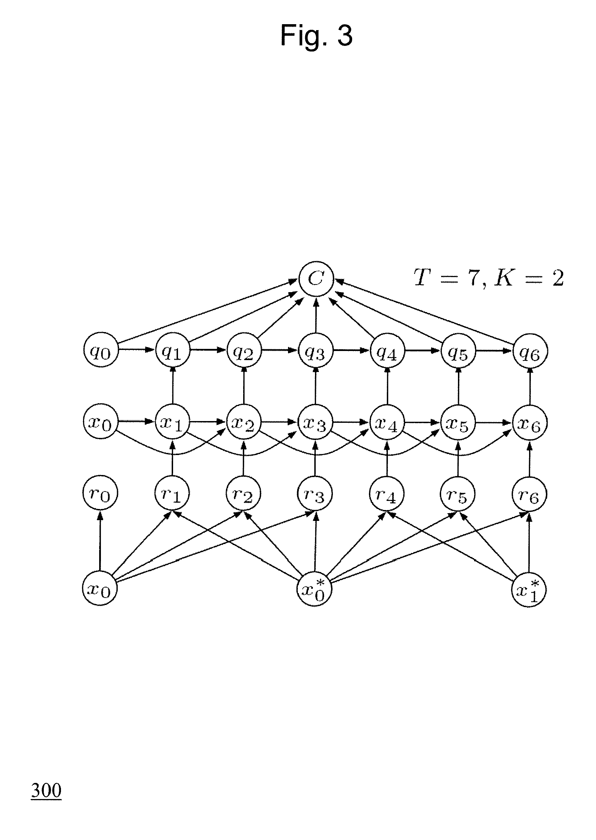

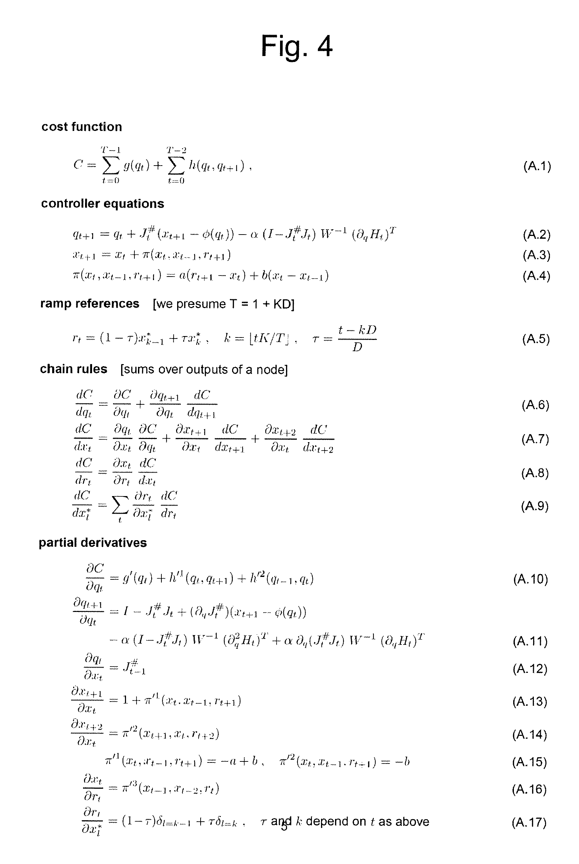

Figure 3 shows a functional network of the control architecture. The precise equations for the above backward propagation may be derived from the structure of the functional dependencies between the different levels of representations (which are the level of control points, the ramp trajectory, the smoothed effector trajectory, and the robot state trajectory). Figure 4 summarizes these exact dependencies and the back-propagation equations.

**Claims**

1. Method for controlling a system or robot having at least one effector,
   comprising the steps:

   - computing an initial sequence of control points
   - evaluating the system with respect to a global cost function using internal simulation based on the control points;
   - updating the set of control points based on the evaluation,

   wherein the last two steps are repeated until a given termination criterion is met.

2. Method according to claim 1, wherein the global cost function comprises optimality criteria that are formulated such that the underlying reactive attractor dynamics generate globally optimal trajectories.

3. Method according to claim 1, wherein the timing of control points is controlled by causal events.

4. Method according to claim 1, wherein the initial sequence is computed by linear interpolation from the initial effector position to the target position x.

5. Method according to one of the preceding claims, wherein computing the global cost function comprises the steps of:

> - forward simulating the robot's behaviour;
> - backward propagating the cost function gradients.

6. Method according to claim 1, wherein
the set of control points is updated using RPROP, the Conjugate Gradient method or stochastic search.

7. Method according to one of the preceding claims, wherein the new control points are computed while the system has already started to move and the newly generated control points are applied during execution of the motion.

8. Method according to claim 1, wherein the control points comprise task parameters which are also subject to optimization.

9. Method according to claim 1, wherein the number of control points is optimized.

10. Method according to claim 1, wherein the timing of the control points is optimized..

11. Method according to claim 1, wherein the global cost function comprises a combination of optimality criteria comprising collision avoidance, momentum compensation or the similarity to observed human motion.

12. Method according to one of claims 1 to 11, wherein the control points are commanded time-synchronously to the system.

13. Method according to one of claims 1 to 11, wherein the control points are commanded to the system synchronized by causal events.

14. Computer-readable medium comprising instructions that, when executed on a computer, perform one of the methods according to claims 1 to 12.

15. System, comprising:

> - means for computing an initial sequence of control points
> - means for evaluating the system with respect to a global cost function using internal simulation based on the control points;
> - means for updating the set of control points based on the evaluation,

being adapted to carry out a method according to one of claims 1 to 12.

# Fig. 1

start with an arbitrary initial
state $q_0$ of the real robot — 110

task target
$r_K^*$

total time
$T$ in sec

number $K$
of segments

compute linear interpolation
sequence $x_{1:K}^*$ of Control Points (CPs) — 120

compute gradient $dC/dx_{1:K}^*$
of the global cost function $C$
w.r.t. the CPs $x_{1:K}^*$ — 130

update the CPs using
RPROP — 140

tolerance
parameter

termination criterion — 150     NO

YES

command sequence of optimized CPs
$x_{1:K}^*$ to the real robot, each CP is
active for $T/K$ secs — 160

real robot will have reached the
task target in $T$ secs fulfilling
the optimality criteria — 170

100

# Fig. 2

Cost
Function
Criteria

210

220

230

240

250

260

270

280

290

200

# Fig. 3

$T = 7, K = 2$

300

# Fig. 4

**cost function**

$$C = \sum_{t=0}^{T-1} g(q_t) + \sum_{t=0}^{T-2} h(q_t, q_{t+1}) \ , \tag{A.1}$$

**controller equations**

$$q_{t+1} = q_t + J_t^{\#}(x_{t+1} - \phi(q_t)) - \alpha \left(I - J_t^{\#}J_t\right) W^{-1} \left(\partial_q H_t\right)^T \tag{A.2}$$

$$x_{t+1} = x_t + \pi(x_t, x_{t-1}, r_{t+1}) \tag{A.3}$$

$$\pi(x_t, x_{t-1}, r_{t+1}) = a(r_{t+1} - x_t) + b(x_t - x_{t-1}) \tag{A.4}$$

**ramp references**   [we presume T = 1 + KD]

$$r_t = (1 - \tau)x_{k-1}^{*} + \tau x_k^{*} \ , \quad k = \lfloor tK/T \rfloor \ , \quad \tau = \frac{t - kD}{D} \tag{A.5}$$

**chain rules**   [sums over outputs of a node]

$$\frac{dC}{dq_t} = \frac{\partial C}{\partial q_t} + \frac{\partial q_{t+1}}{\partial q_t}\frac{dC}{dq_{t+1}} \tag{A.6}$$

$$\frac{dC}{dx_t} = \frac{\partial q_t}{\partial x_t}\frac{\partial C}{\partial q_t} + \frac{\partial x_{t+1}}{\partial x_t}\frac{dC}{dx_{t+1}} + \frac{\partial x_{t+2}}{\partial x_t}\frac{dC}{dx_{t+2}} \tag{A.7}$$

$$\frac{dC}{dr_t} = \frac{\partial x_t}{\partial r_t}\frac{dC}{dx_t} \tag{A.8}$$

$$\frac{dC}{dx_l^{*}} = \sum_t \frac{\partial r_t}{\partial x_l^{*}}\frac{dC}{dr_t} \tag{A.9}$$

**partial derivatives**

$$\frac{\partial C}{\partial q_t} = g'(q_t) + h'^1(q_t, q_{t+1}) + h'^2(q_{t-1}, q_t) \tag{A.10}$$

$$\frac{\partial q_{t+1}}{\partial q_t} = I - J_t^{\#}J_t + (\partial_q J_t^{\#})(x_{t+1} - \phi(q_t))$$
$$- \alpha \left(I - J_t^{\#}J_t\right) W^{-1} \left(\partial_q^2 H_t\right)^T + \alpha \, \partial_q(J_t^{\#}J_t) \, W^{-1} \left(\partial_q H_t\right)^T \tag{A.11}$$

$$\frac{\partial q_t}{\partial x_t} = J_{t-1}^{\#} \tag{A.12}$$

$$\frac{\partial x_{t+1}}{\partial x_t} = 1 + \pi'^1(x_t, x_{t-1}, r_{t+1}) \tag{A.13}$$

$$\frac{\partial x_{t+2}}{\partial x_t} = \pi'^2(x_{t+1}, x_t, r_{t+2}) \tag{A.14}$$

$$\pi'^1(x_t, x_{t-1}, r_{t+1}) = -a + b \ , \quad \pi'^2(x_t, x_{t-1}, r_{t+1}) = -b \tag{A.15}$$

$$\frac{\partial x_t}{\partial r_t} = \pi'^3(x_{t-1}, x_{t-2}, r_t) \tag{A.16}$$

$$\frac{\partial r_t}{\partial x_l^{*}} = (1 - \tau)\delta_{l=k-1} + \tau\delta_{l=k} \ , \quad \tau \text{ and } k \text{ depend on } t \text{ as above} \tag{A.17}$$

**European Patent Office**

**EUROPEAN SEARCH REPORT**

Application Number

EP 07 10 4900

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JAE-KYUNG LEE ET AL: "Motion planning for a mobile manipulator to execute a multiple point-to-point task" INTELLIGENT ROBOTS AND SYSTEMS '96, IROS 96, PROCEEDINGS OF THE 1996 LEEE/RSJ INTERNATIONAL CONFERENCE ON OSAKA, JAPAN 4-8 NOV. 1996, NEW YORK, NY, USA,IEEE, US, vol. 2, 4 November 1996 (1996-11-04), pages 737-742, XP010212450 ISBN: 0-7803-3213-X * figures 2,3 * * page 739, left-hand column * * page 739, right-hand column, last paragraph - page 740, left-hand column * | 1,6,11, 14,15 | INV. B25J9/16 |
| X | JANABI-SHARIFI F ET AL: "Integration of the artificial potential field approach with simulated annealing for robot path planning" INTELLIGENT CONTROL, 1993., PROCEEDINGS OF THE 1993 IEEE INTERNATIONAL SYMPOSIUM ON CHICAGO, IL, USA 25-27 AUG. 1993, NEW YORK, NY, USA,IEEE, 25 August 1993 (1993-08-25), pages 536-541, XP010137238 ISBN: 0-7803-1206-6 * abstract; figures 4,5 * * page 537, right-hand column, paragraphs 2,3 * * page 538, paragraph 3.2 * | 1,2,11, 14,15 | |
| A | CAPI G ET AL: "A new optimization method based on genetic algorithm for walking humanoid robots" CONFERENCE PROCEEDINGS, 27 April 2000 (2000-04-27), pages 61-66, XP010523935 * figure 3 * | 1-15 | |

TECHNICAL FIELDS SEARCHED (IPC)

B25J

The present search report has been drawn up for all claims

| Place of search | Date of completion of the search | Examiner |
|---|---|---|
| Munich | 31 January 2008 | Lumineau, Stéphane |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HEIM et al.** Trajectory Optimization of Industrial Robots with Application to Computer-Aided Robotics and Robot Controllers. *Optimization (Journal,* vol. 47, 407-420
- **SCHLEMMER ; GRUEBEL.** Real-Time Collision-Free Trajectory Optimization of Robot Manipulators via Semi-Infinite Parameter Optimization. *International Journal of Robotics Research,* September 1998, vol. 17 (9), 013-1021
- **ZHANG ; KNOLL.** An Enhanced Optimization Approach for Generating Smooth Robot Trajectories in the Presence of Obstacles. *Proc. of the 1995 European Chinese Automation Conference,* September 1995, 63-268
- Optimization-based trajectory planning of the human upper body. **ABDEL-MALEK et al.** Robotica (Journal. Cambridge University Press, 2006
- **F. A. MUSSA-IVALDI ; S. F. GISZTER ; E. BIZZI.** Linear combinations of primitives in vertebrate motor control. *Neurobiology,* 1994, vol. 91, 7534-7538
- **E. BIZZI ; A. D'AVELLA ; P. SALTIEL ; M. TRESCH.** Modular organization of spinal motors systems. *The Neuroscientist,* 2002, vol. 8, 437-442
- **AMIT ; MATARIC.** Parametric primitives for motor representation and control. *Proc. of the Int. Conf. on Robotics and Automation (ICRA,* 2002, 863-868
- **A. IJSPEERT ; J. NAKANISHI ; S. SCHAAL.** Trajectory formation for imitation with nonlinear dynamical systems. *Proc. of the IEEE Int. Conf. on Intelligent Robots and and Systems,* 2001
- **S. SCHAAL ; J. PETERS ; J. NAKANISHI ; A. IJSPEERT.** Control, planning, learning, and imitation with dynamic movement primitives. In Workshop on Bilateral Paradigms on Humans and Humanoids. *IEEE Int. Conf. on Intelligent Robots and Systems,* 2003